# EUROPÄISCHE PATENTSCHRIFT

(11) **EP 2 431 981 B1**
(45) Veröffentlichungstag und Bekanntmachung des Hinweises auf die Patenterteilung: **11.05.2016**
(21) Anmeldenummer: 11175757.1
(22) Anmeldetag: 28.07.2011
(51) Int. Cl.: H01R 9/03, H01R 107/00, H01B 11/04, H02G 1/00

(54) **Elektrisches Kabel, Vorrichtung zur Fixierung von Adern eines elektrischen Kabels, Verbindungskontakt und Verfahren zur Herstellung eines elektrischen Kabels**
Electrical cable, device for fixing cores of an electric cable, connection contact and method for producing an electrical cable
Câble électrique, dispositif de fixation des brins d'un câble électrique, contact de connexion et procédé de fabrication d'un câble électrique

(30) Priorität: 15.09.2010 DE 102010045444
(43) Veröffentlichungstag der Anmeldung: 21.03.2012
(73) Patentinhaber: MCQ TECH GmbH, 78176 Blumberg (DE)
(72) Erfinder: Pyczak, Andreas, 78247 Hilzingen (DE); Renz, Thomas, 78166 Donaueschingen (DE); Sticker, Rolf, 78166 Donaueschingen (DE)
(74) Vertreter: Westphal, Mussgnug & Partner Patentanwälte mbB

(56) Entgegenhaltungen:
- DE-C- 376 880
- DE-C- 626 276
- DE-C1- 4 418 259
- DE-U- 1 719 419
- US-A1- 2006 035 513
- US-A1- 2006 237 218
- US-A1- 2008 233 794
- US-B1- 6 290 532

## Beschreibung

Die Erfindung betrifft ein elektrisches Kabel gemäß dem Oberbegriff des Patentanspruchs 1, eine Vorrichtung zur Fixierung von Adern eines elektrischen Kabels gemäß dem Oberbegriff des Patentsanspruchs 4, einen Verbindungskontakt gemäß dem Oberbegriff des Patentanspruchs 8 sowie eine Verwendung der erfindungsgemäßen Vorrichtung bei der Herstellung eines elektrischen Kabels nach Patentanspruch 10.

Bekannt sind elektrische Kabel mit mindestens vier, vorzugsweise exakt vier Adern, welche in ein erstes und ein zweites Paar gruppiert sind, wobei jedes der Paare jeweils eine erste und eine zweite Ader aufweist, wobei zumindest in einem ersten Längenabschnitt die zu dem ersten Paar gehörenden Adern in einer ersten Ebene parallel zueinander und die zu dem zweiten Paar gehörenden Adern in einer zweiten Ebene parallel zueinander angeordnet sind und die beiden Ebenen sich in einer Schnittgeraden schneiden, wobei die Schnittgerade parallel zu den Adern verläuft und die Abstände zwischen jeweils einer Ader und der Schnittgeraden gleichgroß sind, wobei in zumindest dem ersten Längenabschnitt der Schnittwinkel zwischen den Ebenen 90° beträgt. Kabel mit einer derartigen Anordnung von Adern werden als Sternvierer-Kabel bezeichnet. Sternvierer-Kabel werden insbesondere im Bereich der Automatisierungstechnik vielfach zur Übertragung von Ethernet-Signalen verwendet und sind bereits seit langem aus der Telefontechnik bekannt.

Die EP 1 422 791 A1 beschreibt eine Anordnung von Kontakten in einem Steckverbinder derart, dass die räumliche Anordnung des Sternvierers erhalten bleibt.

Bekannt sind weiterhin sogenannte Kabelmanager, d.h. kabelordnende Einsätze für Verbindungskontakt, die die elektrischen Adern eines elektrischen Kabels in definierter relativer Position zu einander fixieren. Einen derartigen kabelordnenden Einsatz zeigt beispielsweise die DE 10 2009 010 492 B3.

Weiterer Stand der Technik ist aus der DE 376 880 C, DE 626 276 C, DE 17 19 419 U, US 6 290 532 B1, DE 44 18 259 C1, US 2006/237218 A1, US 2006/035513 A1 und der US 2008/233794 A1 bekannt.

Oft werden Kabel an beiden Enden mit einem Stecker versehen, die die gleiche Pinbelegung aufweisen sollen. Bei derartigen Kabeln handelt es sich um sogenannte Patchkabel.

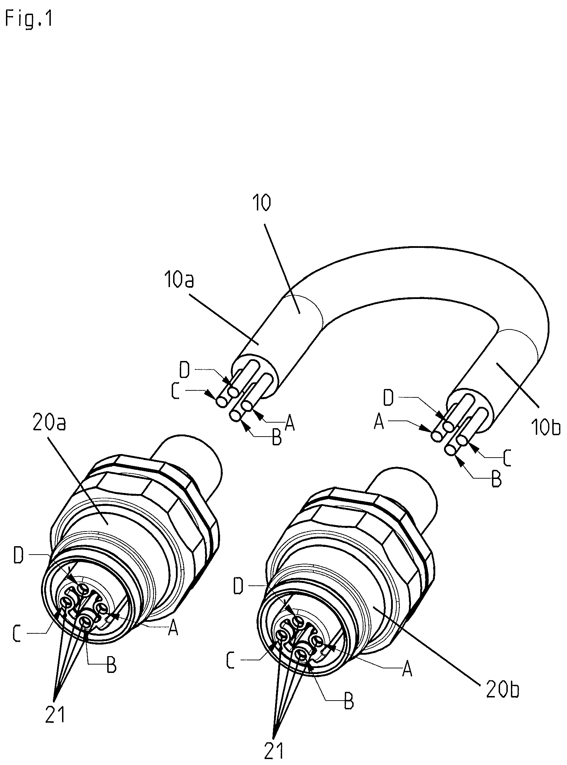

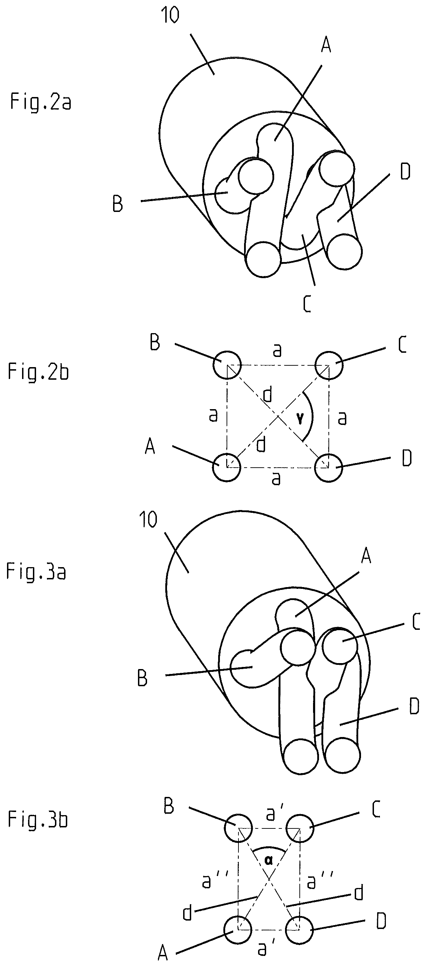

Figur 1 zeigt ein Kabel 10 mit 4 Adern A, B, C, D welche in ein erstes und ein zweites Paar gruppiert sind. Das erste Paar weist eine erste Ader A und eine zweite Ader C, während das zweite Paar eine erste Ader B und eine zweite Ader D aufweist. Die zu dem ersten Paar gehörenden Adern A, C liegen in der ersten Ebene parallel zueinander in einem Abstand d während die zu dem zweiten Paar gehörenden Adern B, D in einer zweiten Ebene parallel zueinander in einem Abstand d angeordnet sind. Die beiden Ebenen schneiden sich in einer Schnittgeraden, welche parallel zu den Adern A, B, C, D verläuft. Dabei sind die Abschnitte zwischen jeweils einer Ader A, B, C, D und der Schnittgeraden gleich groß. Der Schnittwinkel zwischen den Ebenen beträgt 90°. Dies bedeutet insbesondere, dass der Abstand zwischen zwei benachbarten Adern, d. h. der Abstand a zwischen den Adern A und B, der Abstand a zwischen den Adern A und D, der Abstand a zwischen den Adern B, C, sowie der Abstand a zwischen den Adern C, D, gleich groß sind (vgl. Figur 2b). Liegen an einem ersten Ende 10a des Kabels 10 die Adern im Uhrzeigersinn gesehen A, B, C, D, so liegen die Adern bei Draufsicht auf das zweite Ende 10b des entsprechenden Kabels 10 im Uhrzeigersinn in der Reihenfolge A, D, C, B. Beide Enden 10a, 10b des Kabels 10 weisen jeweils einen Verbindungskontakt 20a, 20b auf. Die Verbindungskontakte 20a, 20b können wie in Figur 1 dargestellt als Buchsen ausgebildet sein. Alternativ können die Verbindungskontakte 20a, 20b als Stecker ausgebildet sein. Wesentlich ist, dass beide Verbindungskontakte 20a, 20b von der selben Art sind. Sollen an beide Enden 10a, 10b des Kabels 10 Verbindungskontakte 20a, 20b angebracht werden, deren Kontakte 21 die gleiche Pinbelegung aufweisen, nämlich insbesondere eine Belegung der Kontakte 21 im Uhrzeigersinn in der Reihenfolge A, B, C, D, ist es nötig, eine Adernkreuzung vorzunehmen (vgl. Fig. 2a). Bei der Adernkreuzung werden die erste Ader mit A des ersten Paares mit der ersten Ader B des zweiten Paares und die zweite Ader C des ersten Paares mit der zweiten Ader D des zweiten Paares gekreuzt. Ein derartiges Kreuzen bedeutet dabei, dass nach der Kreuzung der Verlauf der ersten Ader A des ersten Paares und der ersten Ader B des zweiten Paares quasi getauscht ist und ebenso der Verlauf der zweiten Ader C des ersten Paares und der zweiten Ader D des zweiten Paares ebenfalls quasi getauscht ist. Durch die Adernkreuzung wird erreicht, dass bei Draufsicht auf die beiden Enden 10a, 10b des Kabels 10 die Anordnung der Adern im Uhrzeigersinn jeweils A, B, C, D ergibt. Wie aus Figur 2 in Kombination mit Figur 1 erkennbar, kann anschließend an das gekreuzte Ende 10b des Kabels 10 der Verbindungskontakt 20b mit der identischen Pinbelegung wie der Verbindungskontakt 20a an dem ersten Ende 10a des Kabels 10 angebracht werden. Durch die Adernkreuzung verschlechtern sich allerdings die übertragungstechnischen Eigenschaften des Kabels erheblich.

Die Aufgabe der Erfindung besteht daher darin, eine Adernanordnung bereitzustellen, welche die durch die Adernkreuzung auftretenden Effekte weitgehend kompensiert und die übertragungstechnischen Eigenschaften eines Kabels mit Adernkreuzung verbessert.

Die Aufgabe der Erfindung wird gelöst durch ein elektrisches Kabel mit den Merkmalen des Patentanspruchs 1 sowie eine Vorrichtung zur Fixierung von Adern eines elektrischen Kabels mit den Merkmalen des Patentanspruchs 4 und einen Verbindungskontakt für ein elektrisches Kabel mit den Merkmalen des Patentanspruchs 8. Weiterhin ist eine Verwendung der erfindungsgemäßen Vorrichtung bei der Herstellung eines erfindungsgemäßen elektrischen Kabels in Patentanspruch 10 angegeben.

Vorteilhafte Ausgestaltungen und Weiterbildungen der Erfindung sind in den abhängigen Ansprüchen angegeben.

Das erfindungsgemäße elektrische Kabel mit mindestens vier, vorzugsweise exakt vier, Adern welche in ein erstes und ein zweites Paar gruppiert sind, wobei jedes der Paare jeweils eine erste und eine zweite Ader aufweist, wobei zumindest in einem ersten und einem dritten Längenabschnitt die zu dem ersten Paar gehörenden Adern in einer ersten Ebene parallel zueinander und die zu dem zweiten Paar gehörenden Adern in einer zweiten Ebene parallel zueinander angeordnet sind und die beiden Ebenen sich in einer Schnittgeraden schneiden, wobei die Schnittgerade parallel zu den Adern verläuft und die Abstände zwischen jeweils einer Ader und der Schnittgeraden gleich groß sind, wobei in zumindest dem ersten Längenabschnitt der Schnittwinkel zwischen den Ebenen 90° beträgt, und wobei in einem zweiten Längenabschnitt sich die erste Ader des ersten Paares mit der ersten Ader des zweiten Paares und die zweite Ader des ersten Paares mit der zweiten Ader des zweiten Paares kreuzt, zeichnet sich dadurch aus, dass zumindest in dem dritten Längenabschnitt der Schnittwinkel zwischen den Ebenen von 90° verschieden ist, und dass im dritten Längenabschnitt ein Abstand zwischen den Adern des ersten Paares und ein Abstand zwischen den Adern des zweiten Paares gleich bleibt und jeweils zwei Adern von verschiedenen Paaren, nämlich einerseits die erste Ader des ersten Paares und die zweite Ader des zweiten Paares und andererseits die erste Ader des zweiten Paares und die zweite Ader des ersten Paares, in geringerem Abstand als in dem ersten Längenabschnitt zueinander geführt werden, während die jeweils anderen Adern von verschiedenen Paaren, nämlich einerseits die erste Ader des ersten Paares und die erste Ader des zweiten Paares und andererseits die zweite Ader des ersten Paares und die zweite Ader des zweiten Paares, in größerem Abstand als in dem ersten Längenabschnitt zueinander geführt werden. Dies bewirkt, dass jeweils zwei zu unterschiedlichen Paaren gehörender Adern nach der Kreuzung parallel räumlich näher aneinander geführt werden als in dem ersten Längenabschnitt. Dadurch wird eine hochfrequenzmäßige Kopplung bewirkt, die der ungewollten im Bereich der Adernkreuzung der Adern entgegenwirkt und somit die übertragungstechnischen Eigenschaften des Kabels verbessert.

Vorzugsweise beträgt in dem dritten Längenabschnitt der Schnittwinkel zwischen den Ebenen zwischen 40° und 80°, vorzugsweise etwa 60°. Bei einem derartigen Schnittwinkel ergibt sich eine räumliche Nähe der näher aneinandergeführten Adern, die der ungewollten Kopplung, welche durch die Adernkreuzung hervorgerufen wird, besonders günstig entgegenwirkt.

Gemäß einer bevorzugten Ausführungsform der Erfindung weist das Kabel einen ersten Verbindungskontakt und einen zweiten Verbindungskontakt auf, wobei der erste Längenabschnitt abschnittsweise in dem ersten Verbindungskontakt und der dritte Längenabschnitt abschnittsweise in dem zweiten Verbindungskontakt angeordnet ist. Auf diese Art und Weise kann möglichst einfach ein Kabel realisiert werden, welches an beiden Enden mit einem Verbindungskontakt versehen ist, welche die gleiche Pinbelegung aufweisen, d.h. insbesondere ein sogenanntes Patchkabel.

Die erfindungsgemäße Vorrichtung zur Fixierung zu mindestens vier, vorzugsweise exakt vier, Adern eines elektrischen Kabels, insbesondere eines erfindungsgemäßen elektrischen Kabels, wobei die Vorrichtung vier Aufnahmen für die vier Adern aufweist, wobei die vier Aufnahmen in eine erstes Paar und ein zweites Paar gruppiert sind, wobei jedes der Paare jeweils eine erste und eine zweite Aufnahme aufweist, wobei zumindest in einem Längenabschnitt die zu dem ersten Paar gehörenden Aufnahmen in einer ersten Ebene parallel zueinander und die zu dem zweiten Paar gehörenden Aufnahmen in einer zweiten Ebene parallel zueinander angeordnet sind und die beiden Ebenen in einer Schnittgeraden schneiden, wobei die Schnittgerade parallel zu den Aufnahmen verläuft und die Abstände zwischen jeweils einer Aufnahme und der Schnittgeraden gleich groß sind, zeichnet sich dadurch aus, dass der Schnittwinkel zwischen den Ebenen von 90° verschieden ist. Mithilfe einer derartigen Vorrichtung gelingt es auf einfache Art und Weise, die gewünschte Adernanordnung zur Kompensation des Übersprechens im Bereich der Adernkreuzung über einen gewünschten Längenabschnitt im Anschluss an den Bereich der Adernkreuzung zu definieren.

Vorzugsweise sind die Aufnahmen des ersten Paares zumindest abschnittsweise als Durchgangsöffnungen und/oder die Aufnahmen des zweiten Paares zumindest abschnittsweise als auf der Außenseite der Vorrichtung angeordnete halboffene Kammern aufgeführt. Eine derartige Ausgestaltung der Vorrichtung ermöglicht ein einfaches reproduzierbares Herstellen der Anordnung und eine zuverlässige Fixierung der Adern relativ zueinander.

Vorzugsweise weisen die Kammern Rastvorsprünge auf, um die Adern in den Kammern entsprechend fixieren zu können.

Eine erfindungsgemäße Vorrichtung kommt insbesondere in einem wie zuvor beschriebenen elektrischen Kabel zur Anwendung.

Der erfindungsgemäße Verbindungskontakt, welcher vorzugsweise als Rundsteckverbinder ausgebildet ist, für ein elektrisches Kabel wie voran beschrieben hat eine Vorrichtung zur Fixierung von mindestens vier, vorzugsweise exakt vier, Adern eines elektrischen Kabels wie zuvor beschrieben, sodass eine definierte Adernführung innerhalb des Verbindungskontakts auf einfache Art und Weise realisiert werden kann.

Erfindungsgemäß weist das elektrische Kabel eine Vorrichtung zur Fixierung von vier Adern des elektrischen Kabels auf und zeichnet sich dadurch aus, dass das elektrische Kabel ein elektrisches Kabel wie voran beschrieben und die Vorrichtung eine Vorrichtung wie voran beschrieben ist.

Die erfindungsgemäße Verwendung der erfindungsgemäßen Vorrichtung bei der Herstellung eines elektrischen Kabels ist gekennzeichnet durch:
a) Durchführen der Adern des ersten Paares durch die Durchgangsöffnungen einer Vorrichtung zur Fixierung von mindestens vier, vorzugsweise exakt vier, Adern eines elektrischen Kabels, wobei zunächst die Adern des ersten Paares in die Durchgangsöffnungen der Aufnahmen eingeschoben werden, anschließend die Vorrichtung um einen Drehwinkel verdreht wird, der größer ist als der Winkelabstand zweier benachbarter Adern, und die Adern des zweiten Paares in die Aufnahmen eingelegt und insbesondere klemmend fixiert werden, wobei die Vorrichtung vier Aufnahmen für die vier Adern aufweist, wobei die vier Aufnahmen in ein erstes und ein zweites Paar gruppiert sind, wobei jedes der Paare jeweils eine erste und eine zweite Aufnahme aufweist, wobei zumindest in einem Längenabschnitt die zu dem ersten Paar gehörenden Aufnahmen in einer ersten Ebene parallel zueinander und die zu dem zweiten Paar gehörenden Aufnahmen in einer zweiten Ebene parallel zueinander angeordnet sind und die beiden Ebenen sich in einer Schnittgeraden schneiden, wobei die Schnittgerade parallel zu den Aufnahmen verläuft, wobei die Abstände zwischen jeweils einer Aufnahme und der Schnittgeraden gleich groß sind und der Schnittwinkel zwischen den Ebenen von 90° verschieden ist, wobei die Aufnahmen des ersten Paares als Durchgangsöffnungen ausgeführt sind und die Aufnahmen des zweiten Paares als auf der Außenseite der Vorrichtung angeordnete halboffene Kammern ausgeführt sind,
b) Verdrehen der Vorrichtung um ihre Längsachse um einen Drehwinkel, der größer ist als der Winkelabstand zweier benachbarter Adern,
c) Einlegen der Adern des zweiten Paares in die halboffenen Kammern.

Auf diese Art und Weise kann einfach und reproduzierbar die Adernkreuzung in einem elektrischen Kabel sowie die anschließende Adernführung zur Kompensation der durch die Adernkreuzung bewirkten Effekte hergestellt werden.

Die Erfindung wird anhand der folgenden Figuren ausführlich erläutert.

Es zeigt
- Figur 1: eine perspektivische Ansicht eines Kabels mit zwei Verbindungskontakten,
- Figur 2a: eine perspektivische Ansicht einer Adernkreuzung gemäß dem Stand der Technik,
- Figur 2b: eine Schnittdarstellung durch die Adernanordnung des Kabels gemäß Figur 2a nach der Adernkreuzung gemäß dem Stand der Technik,
- Figur 3a: eine perspektivische Ansicht einer Adernkreuzung gemäß der Erfindung,
- Figur 3b: eine Schnittdarstellung durch die Adernanordnung des Kabels gemäß Figur 3a nach der Adernkreuzung gemäß der Erfindung,
- Figur 4: eine perspektivische Ansicht einer Vorrichtung zum Fixieren von Adern,
- Figur 5: eine Frontansicht der Vorrichtung gemäß Figur 4,
- Figur 6: eine perspektivische Ansicht eines Abschnitts eines Kabels gemäß der Erfindung,
- Figur 7: ein Vergleich der übertragungstechnischen Eigenschaften eines Kabels gemäß dem Stand der Technik mit einem erfindungsgemäßen Kabel.

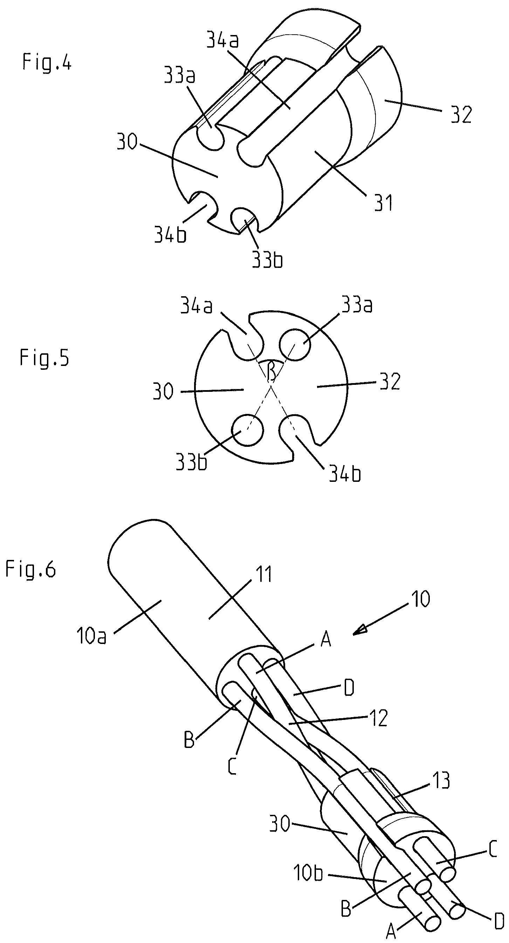

Figur 1 zeigt ein Kabel 10 mit vier Adern A ,B, C, D, wobei die Adern A, C ein erstes Paar sowie die Adern B, D ein zweites Paar bilden. Das erfindungsgemäße Kabel 10 weist wie in Figur 6 ersichtlich einen ersten Längenabschnitt 11 und einen dritten Längenabschnitt 13 auf, in welchen die zu dem ersten Paar gehörenden Adern A, C in einer ersten Ebene parallel zueinander in einem Abstand d und die zu dem zweiten Paar gehörenden Adern B, D in einer zweiten Ebene parallel zueinander in einem Abstand d angeordnet sind und die beiden Ebenen sich in einer Schnittgeraden schneiden, wobei die Schnittgerade parallel zu den Adern A, B, C, D verläuft und die Abstände a zwischen jeweils einer Ader A, B, C, D und der Schnittgeraden gleich groß sind, nämlich insbesondere d/2 . In dem ersten Längenabschnitt beträgt der Schnittwinkel γ zwischen den Ebenen 90°.

Die Figur 2b zeigt einen Schnitt durch einen Längenabschnitt eines Kabels gemäß dem Stand der Technik, welcher einem Schnitt durch den ersten Längenabschnitt 11 des erfindungsgemäßen Kabel 10 entspricht.

In einem zweiten Längenabschnitt 12 zwischen dem ersten Längenabschnitt 11 und dem dritten Längenabschnitt 13 ist eine Adernkreuzung angeordnet (vgl. Figuren 3a und 6). Dabei kreuzen sich die erste Ader A des ersten Paares mit der ersten Ader B des zweiten Paares und die zweite Ader C des ersten Paares mit der zweiten Ader D des zweiten Paares. Die Kreuzung bedeutet dabei insbesondere, dass nach der Kreuzung die entsprechenden Adern quasi vertauscht weitergeführt werden. Durch die Adernkreuzung wird erreicht, dass bei Draufsicht auf die beiden Enden 10a, 10b des Kabels 10 die Anordnung der Adern im Uhrzeigersinn jeweils A, B, C, D ergibt. Gleiches wird auch erreicht, wenn die erste Ader A des ersten Paares mit der zweiten Ader D des zweiten Paares und die zweite Ader C des ersten Paares mit der ersten Ader B des zweiten Paares gekreuzt wird.

Bei einer derartigen Adernkreuzung werden die Adern A, B, C, D derart nah aneinander vorbeigeführt, dass ein Übersprechen zwischen den entsprechenden Adern A, B, bzw. C, D erfolgt. Um diesen Effekt zu kompensieren, wird gemäß der Erfindung in dem dritten Längenabschnitt 13 der Schnittwinkel α zwischen den Ebenen als von 90° verschieden gewählt (vgl. Fig. 3b). Dies führt dazu, dass zwar der Abstand d zwischen den Adern A, C des ersten Paares bzw. den Adern B, D des zweiten Paares gleich bleibt, jeweils zwei Adern von verschiedenen Paaren, nämlich die Adern A, D bzw. B, C in geringerem Abstand a' als in dem ersten Längenabschnitt 11 zueinander geführt werden, während die jeweils anderen Adern von verschiedenen Paaren, nämlich die Adern A, B bzw. C, D in größerem Abstand a" als in dem ersten Längenabschnitt 11 zueinander geführt werden, wodurch ein gezieltes Übersprechen zwischen den Adern A, D bzw. B, C erreicht wird, welches den Kopplungseffekt der Adernkreuzung kompensiert. Der Winkel α beträgt vorzugsweise zwischen 40° und 80° und beispielsweise etwa 60°.

Um die Adern A, B, C, D in dem dritten Längenabschnitt 13 zu fixieren, kann eine erfindungsgemäße Vorrichtung 30 verwendet werden, welche in den Figuren 4, 5 und 6 dargestellt ist. Die Vorrichtung 30 weist einen zylindrischen ersten Abschnitt 31 und einen zylindrischen zweiten Abschnitt 32 auf, wobei der Durchmesser des zweiten Abschnitts 32 größer ist als der Durchmesser des ersten Abschnitts 31. Die Vorrichtung 30 weist vier Aufnahmen 33a, 33b, 34a, 34b zur Aufnahme der Adern A, B, C, D auf, wobei die vier Aufnahmen 33a, 33b, 34a, 34b in ein erstes Paar 33a, 33b und ein zweites Paar 34a, 34b gruppiert sind, wobei jedes der Paare jeweils eine erste Aufnahme 33a, 34a und eine zweite Aufnahme 33b, 34b aufweist. Die zu dem ersten Paar gehörenden Aufnahmen 33a, 33b sind in einer ersten Ebene parallel zueinander in einem Abstand d angeordnet und die zu dem zweiten Paar gehörenden Aufnahmen 34a, 34b sind in einer zweiten Ebene parallel zueinander in einem Abstand d angeordnet. Die beiden Ebenen schneiden sich unter einem Schnittwinkel ß in einer Schnittgeraden, wobei die Schnittgerade parallel zu den Aufnahmen 33a, 33b, 34a, 34b verläuft und die Abstände zwischen jeweils einer Aufnahme 33a, 33b, 34a, 34b und der Schnittgeraden gleich groß sind. Der Schnittwinkel β zwischen den Ebenen ist dabei von 90° verschieden und entspricht insbesondere dem Schnittwinkel α der Ebenen der Adernanordnung in dem dritten Längenabschnitt 13. Der Schnittwinkel β liegt somit bevorzugt zwischen 40° und 80° und beträgt beispielsweise etwa 60°.

Die Aufnahmen 33a, 33b, 34a, 34b sind in dem ersten Abschnitt 31 als in Längsrichtung auf der Außenseite des zylindrischen Abschnitts 31 ausgebildete Längsnuten ausgebildet. In dem zweiten Abschnitt 32 sind die Aufnahmen 33a, 33b als Durchgangsöffnungen ausgebildet, während die Aufnahmen 34a, 34b als auf der Außenseite der Vorrichtung 30 angeordnete halboffene Kammern ausgeführt sind. Zumindest die Aufnahmen 34a, 34b weisen zumindest in dem zweiten Abschnitt 32 Rastvorsprünge auf, um die einzulegenden Adern A, B, C, D in den Aufnahmen 34a, 34b zu fixieren. Die Aufnahmen 33a, 33b, 34a, 34b können weiterhin auch in dem ersten Abschnitt 31 Rastvorsprünge derart aufweisen, dass die einzulegenden Adern in den entsprechenden Aufnahmen 33a, 33b, 34a, 34b klemmend gehalten werden.

Die Vorrichtung 30 kommt insbesondere auf folgende Art und Weise zum Einsatz. Damit beide Enden 10a, 10b des Kabels 10 gemäß Fig. 1 eine identische Pinbelegung der anzuschließenden Verbindungskontakt 20a, 20b aufweisen, muss in dem zweiten Längenabschnitt 12 eine Adernkreuzung vorgenommen werden. Dazu werden die im Uhrzeigersinn zunächst in der Reihenfolge A, D, C, B angeordneten Adern (vgl. Figur 1) mithilfe der Vorrichtung 30 auf folgende Art und Weise gekreuzt und fixiert positioniert. Zunächst werden die Adern A, C des ersten Paares in die Durchgangsöffnungen der Aufnahmen 33a, 33b eingeschoben. Anschließend wird die Vorrichtung 30 um einen Drehwinkel verdreht, der größer ist als der Winkelabstand zweier benachbarter Adern. Insbesondere wird die Vorrichtung 30 um 180° um ihre Längsachse verdreht. Anschließend können die Adern B, D des zweiten Paares in die Aufnahmen 34a, 34b eingelegt und insbesondere klemmend fixiert werden. Einerseits erfolgt auf diese Art und Weise eine definierte Adernkreuzung. Andererseits werden in dem dritten Längenabschnitt 13 die Adern A, B, C, D in dem gewünschten relativen Abstand zueinander fixiert, wobei insbesondere der Abstand a' zwischen den Adern A, D sowie der Abstand a' zwischen den Adern B, C kleiner ist als der Abstand a" zwischen den Adern A, B und der Abstand a" zwischen den Adern D, C (Vergleiche Figur 3b).

Die Anordnung der Adern im Uhrzeigersinn ist nun sowohl am ersten Ende 10a des Kabels 10 als auch am zweiten Ende 10b des Kabels 10 A, B, C, D, sodass sowohl an das erste Ende 10a ein Verbindungskontakt 20a als auch an das zweite Ende 10b ein Verbindungskontakt 20b angeschlossen werden kann, wobei beide Verbindungskontakte 20a, 20b identische Pinbelegungen aufweisen. Die freien Enden der Adern A, B, C, D werden an die entsprechenden Kontakte 21 der Verbindungskontakte 20a,20b angeschlossen, wobei beim Anschließen der Adern A ,B, C, D des zweiten Endes 10b des Kabels 10 die relative Anordnung der Adern A, B, C, D wieder dahingehend verändert wird, dass die Abstände der benachbarten Adern A, B bzw. A, D bzw. B, C bzw. D, C wiederum gleich groß ist, was bedeutet, dass der Schnittwinkel zwischen den Ebenen der Adernpaare 90° beträgt.

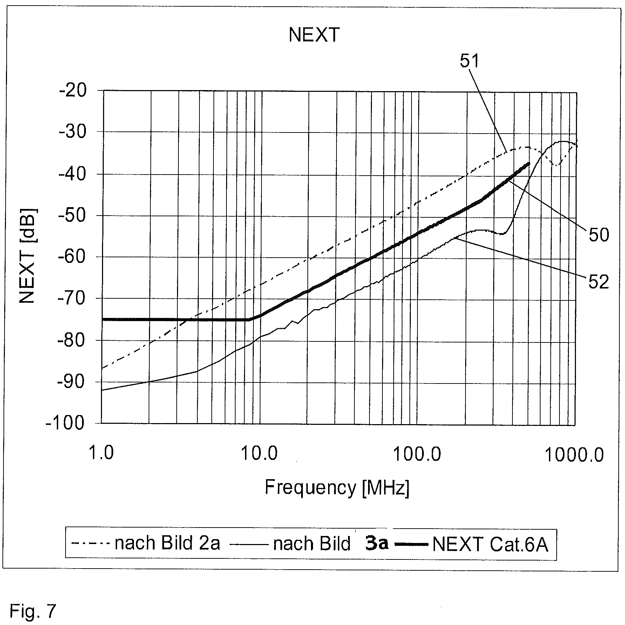

Figur 7 zeigt einen Vergleich der übertragungstechnischen Eigenschaften NEXT(Near End Crosstalk)eines Verbindungskontakts mit einer Adernführung gemäß dem Stand der Technik wie in den Figuren 2a,2b gezeigt sowie eines Verbindungskontakts mit einer Adernführung gemäß der Erfindung wie in den Figuren 3a und 3b gezeigt. Die mit 50 bezeichnete Kurve stellt dabei eine Grenzkurve in der Kategorie 6_{A} für die NEXT-Werte dar. Die mit 51 bezeichnete Kurve zeigt die NEXT-Werte eines Verbindungskontakts gemäß dem Stand der Technik mit einer Adernführung gemäß den Figuren 2a und 2b, wobei in einem großen Frequenzbereich diese Werte oberhalb der angestrebten Grenzkurve 50 verlaufen und somit schlechter als gewünscht sind. Die Kurve 52 bezeichnet die NEXT-Werte eines Verbindungskontakts gemäß der Erfindung mit einer Adernführung gemäß den Figuren 3a und 3b. Dabei ist erkennbar das die NEXT-Werte des erfindungsgemäßen Verbindungskontakts in dem dargestellten Frequenzbereich unterhalb der angestrebten Grenzkurve 50 liegen und somit durch die erfindungsgemäße Adernanordnung eine deutliche Verbesserung der übertragungstechnischen Eigenschaften des Kabels 10 erreicht wird.

### Bezugszeichenliste

- 10: Kabel
- 10a: Erstes Ende
- 10b: Zweites Ende
- 11: Erster Längenabschnitt
- 12: Zweiter Längenabschnitt
- 13: Dritter Längenabschnitt
- A: Erste Ader des ersten Paares
- B: Erste Ader des zweiten Paares
- C: Zweite Ader des ersten Paares
- D: Zweite Ader des zweiten Paares

- 20a: Verbindungskontakt
- 20b: Verbindungskontakt
- 21: Kontakt

- 30: Vorrichtung zum Fixieren von Adern
- 31: Erster Abschnitt
- 32: Zweiter Abschnitt
- 33a: Aufnahme
- 33b: Aufnahme
- 34a: Aufnahme
- 34b: Aufnahme

- 50: Grenzkurve
- 51: NEXT-Werte
- 52: NEXT-Werte

- a, a', a": Abstand
- d: Abstand
- α: Schnittwinkel
- ß: Schnittwinkel
- γ: Schnittwinkel

## Patentansprüche

1. Elektrisches Kabel (10) mit vier Adern (A, B, C, D), welche in ein erstes und ein zweites Paar gruppiert sind, wobei jedes der Paare jeweils eine erste (A, B) und eine zweite Ader (C, D) aufweist, wobei zumindest in einem ersten (11) und einem dritten Längenabschnitt (13) die zu dem ersten Paar gehörenden Adern (A, C) in einer ersten Ebene parallel zueinander und die zu dem zweiten Paar gehörenden Adern (B, D) in einer zweiten Ebene parallel zueinander angeordnet sind und die beiden Ebenen sich in einer Schnittgeraden schneiden, wobei die Schnittgerade parallel zu den Adern (A, B, C, D) verläuft und die Abstände zwischen jeweils einer Ader (A, B, C, D) und der Schnittgeraden gleich groß sind, wobei in zumindest dem ersten Längenabschnitt (11) der Schnittwinkel (γ) zwischen den Ebenen 90° beträgt, und wobei in einem zweiten Längenabschnitt (12) sich die erste Ader (A) des ersten Paares mit der ersten Ader (B) des zweiten Paares und die zweite Ader (C) des ersten Paares mit der zweiten Ader (D) des zweiten Paares kreuzt,
**dadurch gekennzeichnet, dass** zumindest in dem dritten Längenabschnitt (13) der Schnittwinkel (α) zwischen den Ebenen von 90° verschieden ist, und dass im dritten Längenabschnitt (13) ein Abstand (d) zwischen den Adern (A, C) des ersten Paares und ein Abstand (d) zwischen den Adern (B, D) des zweiten Paares gleich bleibt und jeweils zwei Adern von verschiedenen Paaren, nämlich einerseits die erste Ader (A) des ersten Paares und die zweite Ader (D) des zweiten Paares und andererseits die erste Ader (B) des zweiten Paares und die zweite Ader (C) des ersten Paares, in geringerem Abstand (a') als in dem ersten Längenabschnitt (11) zueinander geführt werden, während die jeweils anderen Adern von verschiedenen Paaren, nämlich einerseits die erste Ader (A) des ersten Paares und die erste Ader (B) des zweiten Paares und andererseits die zweite Ader (C) des ersten Paares und die zweite Ader (D) des zweiten Paares, in größerem Abstand (a") als in dem ersten Längenabschnitt (11) zueinander geführt werden.

2. Elektrisches Kabel nach Anspruch 1,
**dadurch gekennzeichnet, dass** in dem dritten Längenabschnitt (13) der Schnittwinkel (α) zwischen den Ebenen zwischen 40° und 80° beträgt.

3. Elektrisches Kabel nach Anspruch 1,
**dadurch gekennzeichnet, dass** das Kabel (10) einen ersten und einen zweiten Verbindungskontakt (20a, 20b) aufweist, wobei der erste Längenabschnitt (11) abschnittsweise in dem ersten Verbindungskontakt (20a) und der dritte Längenabschnitt (13) abschnittsweise in dem zweiten Verbindungskontakt (20b) angeordnet ist.

4. Vorrichtung (30) zur Fixierung von vier Adern (A, B, C, D) eines elektrischen Kabels (10) nach einem der vorhergehenden Ansprüche, wobei die Vorrichtung (30) vier Aufnahmen (33a, 33b, 34a, 34b) für die vier Adern aufweist, wobei die vier Aufnahmen (33a, 33b, 34a, 34b) in ein erstes und ein zweites Paar gruppiert sind, wobei jedes der Paare jeweils eine erste (33a, 34a) und eine zweite Aufnahme (33b, 34b) aufweist, wobei zumindest in einem Längenabschnitt die zu dem ersten Paar gehörenden Aufnahmen (33a, 33b) in einer ersten Ebene parallel zueinander und die zu dem zweiten Paar gehörenden Aufnahmen (34a, 34b) in einer zweiten Ebene parallel zueinander angeordnet sind und die beiden Ebenen sich in einer Schnittgeraden schneiden, wobei die Schnittgerade parallel zu den Aufnahmen (33a, 33b, 34a, 34b) verläuft und die Abstände zwischen jeweils einer Aufnahme (33a, 33b, 34a, 34b) und der Schnittgeraden gleich groß sind,
**dadurch gekennzeichnet, dass** der Schnittwinkel (β) zwischen den Ebenen von 90° verschieden ist.

5. Vorrichtung nach Anspruch 4,
**dadurch gekennzeichnet, dass** die Aufnahmen des ersten Paares (33a, 33b) zumindest abschnittsweise als Durchgangsöffnungen ausgeführt sind.

6. Vorrichtung nach einem der Ansprüche 4 bis 5,
**dadurch gekennzeichnet, dass** die Aufnahmen des zweiten Paares (34a, 34b) zumindest abschnittsweise als auf der Außenseite der Vorrichtung angeordnete halboffene Kammern ausgeführt sind.

7. Vorrichtung nach Anspruch 6,
**dadurch gekennzeichnet, dass** die Kammern Rastvorsprünge aufweisen.

8. Verbindungskontakt (20a, 20b) für ein elektrisches Kabel (10) nach einem der Ansprüche 1 bis 3 mit einer Vorrichtung (30) zur Fixierung von vier Adern (A, B, C, D) eines elektrischen Kabels (10) nach einem der Ansprüche 4 bis 7.

9. Elektrisches Kabel (10) mit einer Vorrichtung (30) zur Fixierung von vier Adern (A, B, C, D) des elektrischen Kabels (10), **dadurch gekennzeichnet, dass** das elektrische Kabel (10) ein elektrisches Kabel (10) nach einem der Ansprüche 1 bis 3 und die Vorrichtung (30) eine Vorrichtung (30) nach einem der Ansprüche 4 bis 7 ist.

10. Verwendung einer Vorrichtung (30) nach einem der Ansprüche 4 bis 7 bei der Herstellung eines elektrischen Kabels (10) nach einem der Ansprüche 1 bis 3:
a) Durchführen der Adern (A, C) des ersten Paares durch die Durchgangsöffnungen einer Vorrichtung (30) zur Fixierung von vier, Adern (A, B, C, D) eines elektrischen Kabels (10), wobei zunächst die Adern (A, C) des ersten Paares in die Durchgangsöffnungen der Aufnahmen (33a, 33b) eingeschoben werden, anschließend die Vorrichtung (30) um einen Drehwinkel verdreht wird, der größer ist als der Winkelabstand zweier benachbarter Adern, und die Adern (B, D) des zweiten Paares in die Aufnahmen (34a, 34b) eingelegt und insbesondere klemmend fixiert werden, wobei die Vorrichtung (30) vier Aufnahmen (33a, 33b, 34a, 34b) für die vier Adern (A, B, C, D) aufweist, wobei die vier Aufnahmen (33a, 33b, 34a, 34b) in ein erstes und ein zweites Paar gruppiert sind, wobei jedes der Paare jeweils eine erste (33a, 34a) und eine zweite Aufnahme (33b, 34b) aufweist, wobei zumindest in einem Längenabschnitt die zu dem ersten Paar gehörenden Aufnahmen (33a, 33b) in einer ersten Ebene parallel zueinander und die zu dem zweiten Paar gehörenden Aufnahmen (34a, 34b) in einer zweiten Ebene parallel zueinander angeordnet sind und die beiden Ebenen sich in einer Schnittgeraden schneiden, wobei die Schnittgerade parallel zu den Aufnahmen (33a, 33b, 34a, 34b) verläuft, wobei die Abstände zwischen jeweils einer Aufnahme (33a, 33b, 34a, 34b) und der Schnittgeraden gleich groß sind und der Schnittwinkel (β) zwischen den Ebenen von 90° verschieden ist, wobei die Aufnahmen (33a, 33b) des ersten Paares als Durchgangsöffnungen ausgeführt sind und die Aufnahmen (34a, 34b) des zweiten Paares als auf der Außenseite der Vorrichtung (30) angeordnete halboffene Kammern ausgeführt sind,
b) Verdrehen der Vorrichtung (30) um ihre Längsachse um einen Drehwinkel, der größer ist als der Winkelabstand zweier benachbarter Adern (A, B, C, D),
c) Einlegen der Adern (B, D) des zweiten Paares in die halboffenen Kammern.

## Claims

1. Electrical cable (10) having four wires (A, B, C, D) which are grouped into a first and a second pair, wherein each of the pairs has a first (A, B) and a second wire (C, D) respectively, wherein, at least in a first (11) and a third length (13), the wires belonging to the first pair (A, C) are arranged in a first level parallel to one another and the wires belonging to the second pair (B, D) are arranged in a second level parallel to one another and both levels intersect in a line of intersection, wherein the line of intersection runs parallel to the wires (A, B, C, D) and the distances between a respective wire (A, B, C, D) and the lines of intersection are of the same size, wherein, in at least the first length (11), the cutting angle (Y) between the levels is 90°, and wherein in a second length (12), the first wire (A) of the first pair intersects with the first wire (B) of the second pair and the second wire (C) of the first pair intersects with the second wire (D) of the second pair,
**characterised in that**, at least in the third length (13), the cutting angle (α) between the levels is different from 90° and, in the third length (13), a distance (d) between the wires (A, C) of the first pair and a distance (d) between the wires (B, D) of the second pair remains the same and two respective wires of different pairs, in particular on one side the first wire (A) of the first pair and the second wire (D) of the second pair and on the other side the first wire (B) of the second pair and the second wire (C) of the first pair, are brought together with smaller spacing (a') than in the first length (11), whereas the respective other wires of different pairs, in particular on one side the first wire (A) of the first pair and the first wire (B) of the second pair and on the other side the second wire (C) of the first pair and the second wire (D) of the second pair, are brought together with larger spacing (a") than in the first length (11).

2. Electrical cable according to claim 1,
**characterised in that**, in the third length (13), the cutting angle (α) between the levels is between 40° and 80°.

3. Electrical cable according to claim 1,
**characterised in that** the cable (10) has a first and a second connection contact (20a, 20b), wherein the first length (11) is arranged in sections in the first connection contact (20a) and the third length (13) is arranged in sections in the second connection contact (20b).

4. Device (30) for fixing four wires (A, B, C, D) of an electrical cable (10) according to one of the preceding claims, wherein the device (30) has four slots (33a, 33b, 34a, 34b) for the four wires, wherein the four slots (33a, 33b, 34a, 34b) are grouped into a first and a second pair, wherein each of the pairs has a first (33a, 34a) and a second slot (33b, 34b) respectively, wherein, at least in one length, the slots (33a, 33b) belonging to the first pair are arranged in a first level parallel to one another and the slots (34a, 34b) belonging to the second pair are arranged in a second level parallel to one another and both levels intersect in a line of intersection, wherein the line of intersection runs parallel to the slots (33a, 33b, 34a, 34b) and the distances between a respective slot (33a, 33b, 34a, 34b) and the lines of intersection are of the same size, **characterised in that** the cutting angle (β) between the levels is different from 90°.

5. Device according to claim 4,
**characterised in that** the slots of the first pair (33a, 33b) are implemented at least in sections as passage openings.

6. Device according to one of claims 4 to 5,
**characterised in that** the slots of the second pair (34a, 34b) are implemented at least in sections as half-open chambers arranged on the outer side of the device.

7. Device according to claim 6,
**characterised in that** the chambers have latching projections.

8. Connection contact (20a, 20b) for an electrical cable (10) according to one of claims 1 to 3 having a device (30) for fixing four wires (A, B, C, D) of an electrical cable (10) according to one of claims 4 to 7.

9. Electrical cable (10) having a device (30) for fixing four wires (A, B, C, D) of the electrical cable (10), **characterised in that** the electrical cable (10) is an electrical cable (10) according to one of claims 1 to 3 and the device (30) is a device (30) according to one of claims 4 to 7.

10. Use of a device (30) according to one of claims 4 to 7 in the production of an electrical cable (10) according to one of claims 1 to 3:
a) Passing the wires (A, C) of the first pair through the passage openings of a device (30) for fixing four wires (A, B, C, D) of an electrical cable (10), wherein the wires (A, C) of the first pair are firstly inserted into the passage openings of the slots (33a, 33b), then the device (30) is twisted around an angle of rotation which is larger than the angular distance of two adjacent wires, and the wires (B, D) of the second pair are inserted into the slots (34a, 34b) and in particular are fixed in a clamped manner, wherein the device (30) has four slots (33a, 33b, 34a, 34b) for the four wires (A, B, C, D), wherein the four slots (33a, 33b, 34a, 34b) are grouped into a first and a second pair, wherein each of the pairs has a first (33a, 34a) and a second slot (33b, 34b) respectively, wherein, at least in one length, the slots belonging to the first pair (33a, 33b) are arranged in a first level parallel to one another and the slots belonging to the second pair (34a, 34b) are arranged in a second level parallel to one another and both levels intersect in a line of intersection, wherein the line of intersection runs parallel to the slots (33a, 33b, 34a, 34b), wherein the distances between a respective slot (33a, 33b, 34a, 34b) and the lines of intersection are of the same size and the cutting angle (β) between the levels is different from 90°, wherein the slots (33a, 33b) of the first pair are implemented as passage openings and the slots (34a, 34b) of the second pair are implemented as half-open chambers arranged on the outer side of the device (30),
b) Twisting the device (30) around its longitudinal axis around an angle of rotation which is larger than the angular distance of two adjacent wires (A, B, C, D),
c) Inserting the wires (B, D) of the second pair into the half-open chambers.

## Revendications

1. Câble électrique (10) comprenant quatre brins (A, B, C, D) qui sont regroupés en une première paire de brins et en une seconde paire de brins, dans lequel, chacune de ces paires comprend respectivement un premier brin (A, B) et un second brin (C, D),
au moins dans un premier segment de longueur (11) et dans un troisième segment de longueur (13), les brins (A, C) appartenant à la première paire sont parallèles et situés dans un premier plan et les brins (B, D), appartenant à la seconde paire sont parallèles et situés dans un second plan, et ces deux plans se coupent selon une droite d'intersection, la droite d'intersection s'étend parallèlement aux brins (A, B, C, D), et les distances entre chacun des brins (A, B, C, D) et la droite d'intersection sont similaires, dans au moins le premier segment de longueur (11), l'angle d'intersection (γ) des plans est égal à 90°, et dans un second segment de longueur (12), le premier brin (A) de la première paire croise le premier brin (B) de la seconde paire et le second brin (C) de la première paire croise le second brin (D) de la seconde paire,
**caractérisé en ce qu'**
au moins dans le troisième segment de longueur (13) l'angle d'intersection (a) des plans est différent de 90°, dans le troisième segment de longueur (13) la distance (d) entre les brins (A, C) de la première paire et la distance (d) entre les brins (B, D) de la seconde paire reste similaire et deux brins respectifs des différentes paires, à savoir d'une part, le premier brin (A) de la première paire et le second brin (D) de la seconde paire et d'autre part le premier brin (B) de la seconde paire et le second brin (C) de la première paire sont situés à une distance (a') plus faible l'un de l'autre que dans le premier segment de longueur (11), tandis que les autres brins respectifs des différentes paires, à savoir d'une part, le premier brin (A) de la première paire et le premier brin (B) de la seconde paire et d'autre part, le second brin (C) de la première paire et le second brin (D) de la seconde paire sont situés à une distance (a") plus grande l'un de l'autre que dans le premier segment de longueur (11).

2. Câble électrique conforme à la revendication 1,
**caractérisé en ce que** dans le troisième segment de longueur (13) l'angle d'intersection (a) ces plans est compris entre 40° et 80°.

3. Câble électrique conforme à la revendication 1,
**caractérisé en ce que**
le câble (10) comprend un premier et un second contacts de connexion (20a, 20b), le premier segment de longueur (11) étant par segments situé dans le premier contact de connexion (20a) tandis que le troisième segment de longueur (13) est par segments situé dans le second contact de connexion (20b).

4. Dispositif (30) permettant de fixer quatre brins (A, B, C, D) d'un câble électrique (10) conforme à l'une des revendications précédentes, comprenant quatre logements de réception (33a, 33b, 34a, 34b) pour les quatre brins, dans lequel les quatre logements de réception (33a, 33b, 34a, 34b) sont regroupés en une première paire et en une seconde paire, chacune des paires comprend respectivement un premier logement de réception (33a, 34a) et un second logement de réception (33b, 34b), au moins dans un segment de longueur, les logements de réception (33a, 33b) appartenant à la première paire sont parallèles et situés dans un premier plan et les logements de réception (34a, 34b) appartenant à la seconde paire sont parallèles et situés dans un second plan, les deux plans se coupent selon une droite d'intersection, la droite d'intersection s'étend parallèlement aux logements de réception (33a, 33b, 34a, 34b), et les distances entre chacun des logements de réception (33a, 33b, 34a, 34b) et la droite d'intersection sont égales,
**caractérisé en ce que**
l'angle d'intersection (β) entre les plans est différent de 90°.

5. Dispositif conforme à la revendication 4,
**caractérisé en ce que**
les logements de réception de la première paire (33a, 33b) sont réalisés au moins par segments sous la forme d'ouvertures de passage.

6. Dispositif conforme à l'une des revendications 4 et 5,
**caractérisé en ce que**
les logements de réception de la seconde paire (34a, 34b) sont réalisés au moins par segments sous la forme de chambres semi-ouverte situées sur la face externe du dispositif.

7. Dispositif conforme à la revendication 6,
**caractérisé en ce que**
les chambres comportent des saillies d'encliquetage.

8. Contact de connexion (20a, 20b) destiné à un câble électrique (10) conforme à l'une des revendications 1 à 3, comprenant un dispositif (30) permettant de fixer quatre brins (A, B, C, D) d'un câble électrique (10) conforme à l'une des revendications 4 à 7.

9. Câble électrique (10) comprenant un dispositif (30) permettant de fixer quatre brins (A, B, C, D) du câble électrique (10),
**caractérisé en ce que**
le câble électrique (10) est un câble électrique (10) conforme à l'une des revendications 1 à 3, tandis que le dispositif (30) est un dispositif (30) conforme à l'une des revendications 4 à 7.

10. Utilisation d'un dispositif (30) conforme à l'une des revendications 4 à 7,
pour l'obtention d'un câble électrique (10) conforme à l'une des revendications 1 à 3, selon laquelle :
a) on fait passer les brins (A, C) de la première paire dans les ouvertures de passage d'un dispositif (30) permettant de fixer quatre brins (A, B, C, D) d'un câble électrique (10), les brins (A, C) de la première paire étant tout d'abord introduits par glissement dans les ouvertures de passage des logements de réception (33a, 33b), puis le dispositif (30) étant tourné d'un angle de rotation qui est supérieur à la distance angulaire de deux brins voisins, et les brins (B, D) de la seconde paire étant introduits dans les logements de réception (34a, 34b) et étant en particulier fixés par serrage, le dispositif (30) comportant quatre logements de réception (33a, 33b, 34a, 34b) pour les quatre brins (A, B, C, D), les quatre logements de réception (33a, 33b, 34a, 34b) étant regroupés en une première paire et en une seconde paire, chacune des paires comprenant respectivement un premier logement de réception (33a, 34a) et un second logement de réception (33b, 34b), au moins dans un segment de longueur, les logements de réception (33a, 33b) appartenant à la première paire étant parallèles et situés dans un premier plan tandis que les logements de réception (34a, 34b) appartenant à la seconde paire sont parallèles et situés dans un second plan, les deux plans se coupant selon une droite d'intersection, la droite d'intersection s'étendant parallèlement aux logements de réception (33a, 33b, 34a, 34b), les distances entre chacun des logements de réception (33a, 33b, 34a, 34b) et la droite d'intersection étant similaires, l'angle d'intersection (β) des plans étant différent de 90°, et les logements de réception (33a, 33b) de la première paire étant réalisés sous la forme d'ouvertures de passage tandis que les logements de réception (34a, 34b) de la seconde paire sont réalisés sous la forme de chambres semi-ouvertes situées sur la face externe du dispositif (30),
b) on fait tourner le dispositif (30) autour de son axe longitudinal d'un angle de rotation qui est supérieur à la distance angulaire entre deux brins voisins (A, B, C, D), et
c) on introduit les brins (B, D) de la seconde paire dans les chambres semi-ouvertes.
